Europäisches Patentamt

European Patent Office

Office européen des brevets

(11) Publication number: **0 121 861**
A1

# EUROPEAN PATENT APPLICATION

(21) Application number: 84103382.2

(22) Date of filing: 27.03.84

(51) Int. Cl.³: **F 16 B 41/00**, G 09 F 3/03

(30) Priority: 29.03.83 DK 586/83

(43) Date of publication of application: 17.10.84
Bulletin 84/42

(84) Designated Contracting States: DE FR GB SE

(71) Applicant: **Norgaard, Otto Johan Magnus,
Cedervaenget 23, 1.th., DK-2830 Virum (DK)**

(72) Inventor: **Norgaard, Otto Johan Magnus,
Cedervaenget 23, 1.th., DK-2830 Virum (DK)**

(74) Representative: **Koepsell, Helmut, Dipl.-Ing.,
Mittelstrasse 7, D-5000 Köln 1 (DE)**

(54) Sealing device.

(57) Sealing device with mounting tube (1) and securing plug (6), principally for the securing of electricity meters, electric appliances, and the like.

The mounting tube is open at one end (2) and has a bottom (3) with a mounting hole (4) at the other end. The securing plug, which can be made either separately or attached to the tube, can be pressed down into the tube after the latter has been mounted. The plug is pressed down past a recess without the use of special-purpose tools, whereby the plug is locked, and it hides/secures the fastening member (9) against tampering as well as against the weather, undesirable appearance, etc.

Sealing Device.

The present invention concerns a sealing device consisting of a tube, which is open at one end and has a bottom with a mounting hole at the other end as well as a plug for securing or hiding a given fastening member, e.g. a screw, in the tube.

Today, various sealing devices are known. For the sealing of e.g. electricity meters lead seals with sealing wire and sealing pliers are normally used. For the guarantee sealing of e.g. electric appliances painting or wax-sealing of screws, nuts, and the like, is often used. When electricity meters, electric appliances etc. are to be sealed, it is often desirable that the sealing can be made quickly without the use of special-purpose tools and without the use of special fastening elements, also in places where there is very little space.

Besides, it is desirable that unauthorized breaking of the seal should be possible only by visible destruction of the sealing without the possibility of reestablishing the sealing. When the sealing is applied for other purposes, it is desirable that the sealing device should hide the fastening member completely for design reasons or e.g. with a view to protection against the weather, liquids, gases, or the like.

According to the invention, the sealing device is unique by virtue of the fact that the fastening member is secured and completely hidden in a tube with a corresponding plug, which is locked after insertion by at least one recess in the tube. When the sealing device is mounted, the bottom of the tube with the mounting hole also functions as a washer for the fastening member.

Thus, the object of the sealing device is to provide industry with a sealing device for the carrying out of sealing tasks in e.g. electricity meters, electric appliances, or the like, without the use of special-purpose tools, without special requirements to the fastening member, and in places where very little space is available. By sealing tasks is understood at least the securing of fastening members such as screws, nuts, etc. against tampering, against disharmony with the surroundings with regard to design, and against undesirable contact with gases, liquids, etc..

According to the invention, a simple form of the sealing device consists of a tube without a recess and a ball-shaped or cone-shaped plug separated from the tube.
However, it may be expedient according to the invention that the tube is provided with one or more internal recesses for the fixation of the plug, whereby the same sealing device can be used for various lengths of fastening members. Likewise, it may be expedient in the production process to cast tube and plug in one piece, so that the sealing device presents itself and is stored as a connected whole before the mounting. This will facilitate the mounting itself. If the device is made of e.g. a plastic material, it may be expedient that the bottom of the tube is made thinner in dimension along the fixation to the tube in order to ensure that the bottom is separated from the tube if attempts are made to break the sealing.

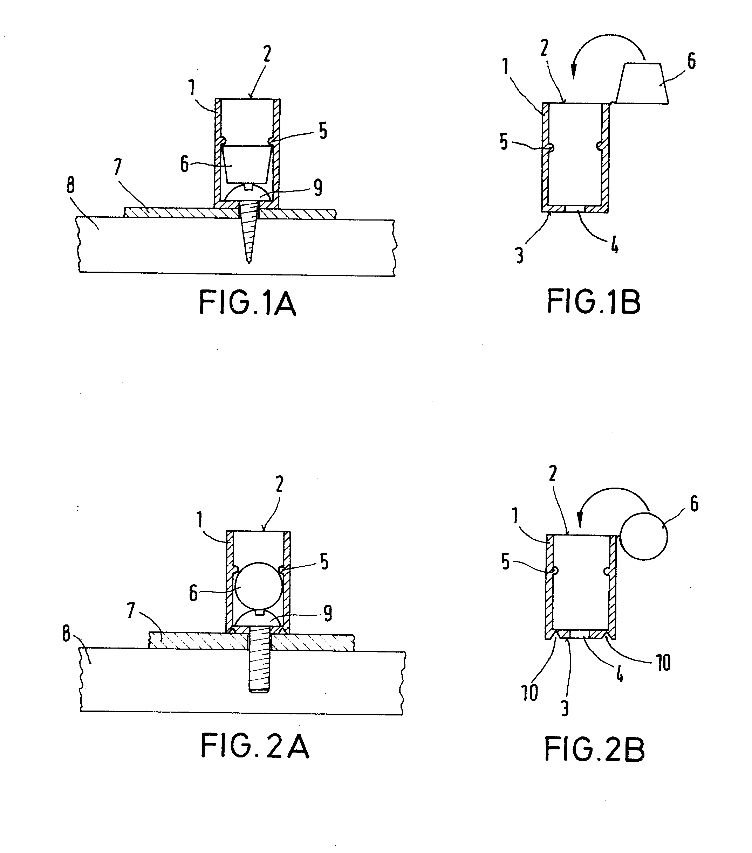

In the drawing there is shown a sealing device according to the invention, where
Fig. 1 a is a sectional drawing of a mounted sealing device with a cone-shaped plug,
Fig. 1 b is a sectional drawing of a sealing device with a cone-shaped plug (unmounted),
Fig. 2 a is a sectional drawing of a mounted sealing device with a ball-shaped plug, and
Fig. 2 b is a sectional drawing of a sealing device with a ball-shaped plug (unmounted).

The sealing device consists of a tube 1, which is open at one end 2 and with a bottom 3 with a mounting hole 4 at the other end. On the inside of the tube there is a recess for the locking of a plug 6 after mounting. The plug 6, which is shown in its cone-shaped version in Fig. 1 b and in its ball-shaped version in Fig. 2 b, can be made independently of the tube 1, but if the device is made of a plastic material the plug and the tube can be cast in one piece, so that the ball-shaped or cone-shaped plug only has to be tilted down into the tube when the device is mounted.

When an object A 7 is mounted on an object B 8 by means of e.g. a screw 9, the screw is put down through the tube and through the mounting hole in the bottom, which functions as a washer when the screw is tightened in the objects A and B. After the screw has been tightened the ball-shaped or cone-shaped plug is tilted down into the tube and past the recess, so that the plug is "locked" by the recess in such a way that it is impossible to take the plug out again without visible violence to the sealing device. Hereby the screw is hidden and secured against tampering, the weather, etc.. In the case of authorized removal of the sealing device the tube is squeezed and broken by means of an ordinary tool, whereby the bottom will break off from the tube, and the screw will become visible and accessible.

The external dimensions of the sealing, both length and diameter, can be varied, and the placing of the recess in the tube can be varied according to the height of the fastening member. Thus the sealing device can be adapted to the current needs and requirements with regard to security, space, and design.

4

0121861

Patent Claims.

1. Sealing device consisting of a tube 1 with a bottom 3 with a mounting hole 4 and an attached plug 6, c h a r a c- t e r i z e d by the fact that after the mounting of the tube the plug is pressed down into the tube, thereby preventing access to the fastening member, e.g. a screw.

2. Sealing device according to claim 1, c h a r a c t e- r i z e d by the fact that on the inside of the tube there is at least one recess for the locking of the plug.

3. Sealing device according to claims 1 or 2, c h a r a c- t e r i z e d by the fact that the tube 1 and the plug 6 are cast in one piece.

4. Sealing device according to claims 1-3, c h a r a c t e r- i z e d by the fact that the bottom of the tube is dimensionally thinner along the fixation to the tube 10 in order to ensure that the bottom will be separated from the tube if attempts are made to break the sealing.

5. Sealing device according to claims 1-4, c h a r a c t e r- i z e d by the fact that the bottom of the tube is a little higher at the centre and is separated from the tube itself, but is kept in place by the screw, in consequence of which the tube itself can be turned round while the screw is kept in place.

FIG.1A

FIG.1B

FIG.2A

FIG.2B

# EUROPEAN SEARCH REPORT

European Patent
Office

**0121861**
Application number

EP 84 10 3382

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-1 887 557 (FRANK KEIDEL) * Frontpage, lines 6-43; page 2, lines 32-38; figures 1,2 * | 1,4 | F 16 B 41/00 G 09 F 3/03 |
| A | US-A-3 740 981 (GEORGE P. PATRIQUIN) * Column 1, line 58 - column 2, line 14; figures 1,2,5 * | 1-3 | |
| A | GB-A-2 093 552 (KIENZLE APPARATE GmbH) * Abstract; page 2, lines 4-9, 61-99, 92-101; figures 1,2,5 * | 1,2 | |
| A | FR-A-2 510 684 (J.Y. BEUGIN) * Page 6, claim 1; figure 1 * | 1 | |
| | ----- | | TECHNICAL FIELDS SEARCHED (Int. Cl. 3) F 16 B G 09 F G 01 F |

The present search report has been drawn up for all claims

| Place of search THE HAGUE | Date of completion of the search 03-07-1984 | Examiner ODGERS M.L. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82